Europäisches Patentamt

European Patent Office

Office européen des brevets

(19)

(11) Veröffentlichungsnummer : **0 121 696**
**B1**

(12) # EUROPÄISCHE PATENTSCHRIFT

(45) Veröffentlichungstag der Patentschrift :
03.12.86

(21) Anmeldenummer : 84101621.5

(22) Anmeldetag : 16.02.84

(51) Int. Cl.⁴ : **H 02 P 7/62**, G 05 F 1/70

(54) Verfahren und Schaltungsanordnung zur Regelung eines Wechselstrom- oder Drehstrommotors.

(30) Priorität : 04.03.83 DE 3307623

(43) Veröffentlichungstag der Anmeldung :
17.10.84 Patentblatt 84/42

(45) Bekanntmachung des Hinweises auf die Patenterteilung : 03.12.86 Patentblatt 86/49

(84) Benannte Vertragsstaaten :
CH DE FR GB IT LI NL

(56) Entgegenhaltungen :
EP-A- 0 053 916
EP-A- 0 075 357
DE-A- 2 333 978
DE-B- 2 205 113

(73) Patentinhaber : Lenze GmbH & Co. KG Aerzen
Hans-Lenze-Strasse 1
D-3251 Aerzen 1 (DE)

(72) Erfinder : Tinebor, Manfred
Enzianweg 1
D-4924 Barntrup (DE)
Erfinder : Matthies, Gustav
Beethovenstrasse 10
D-4924 Barntrup (DE)
Erfinder : Karl, Heinz-Dietmar
Beethovenstrasse 12
D-4924 Barntrup (DE)

(74) Vertreter : Elbertzhagen, Otto et al
Patentanwälte Thieiking & Elbertzhagen Gadderbaumer Strasse 20
D-4800 Bielefeld 1 (DE)

## Beschreibung

Die Erfindung bezieht sich auf ein Verfahren und eine Schaltungsanordnung zur Regelung eines Wechselstrom- oder Drehstrommotors entsprechend dem Gattungsbegriff des Patentanspruchs 1.

Aus der EP-A-53 916 ist ein solches Verfahren mit einer entsprechenden Schaltungsanordnung bekannt, dort wird der Rückspeisestrom im kapazitiven Zwischenkreis gemessen und folglich das Regelsignal für die Blindstromregelung aus einem Strom abgeleitet, der aus mehreren sich überlagernden Komponenten besteht. Man hat bei diesem Stand der Technik auch schon erkannt, daß unter bestimmten Bedingungen ein in den Zwischenkreis zurückfließender Blindstrom gemessen werden kann, der gegenüber dem Wirkstrom eine negative Richtung hat. Dieser negative Blindstrom ist aber nur dann meßbar, wenn der Wechselstrom- oder Drehstrommotor mit einem niedrigen Leistungsfaktor arbeitet, was bei den üblichen Lastfällen mit einem hohen Wirkstromanteil nicht der Fall ist. Deshalb arbeitet das bekannte Verfahren auch nur bis zu etwa einem Wirkanteil von 60 %, weil darüberhinaus ein negativer Blindstrom als Zwischenkreisstrom nicht mehr meßbar ist. Eine optimale Erregung der elektrischen Maschine bei allen Betriebszuständen ist nach diesem bekannten Verfahren nicht möglich.

Die DE-A-2 333 978 beschreibt ein Verfahren und eine Vorrichtung zur Erzeugung eines Gleichstromsteuersignals von einem Wechselrichter, der zur Speisung eines Induktionsmotors dient. Dort wird der durch die Dioden fließende Freilaufstrom gemessen, der dem Leistungsfaktor proportional sein soll. Jedenfalls kann bei Pulswechselrichtern variabler Frequenz und konstanter oder nahezu konstanter Zwischenkreisspannung nach diesem bekannten Verfahren kein brauchbares Regelsignal für die Erregung des Induktionsmotors gewonnen werden. Denn die Freilaufdiodenströme sind bei einem Pulswechselrichter kein Maß für den Motorblindstrom, da sie sich aus dem Rückspeisestrom und dem Freilaufstrom aufgrund der Spannungstransformation zusammensetzen.

Aus der EP-A-0 075 357 ist eine Umrichterschaltung bekannt, über die eine Mehrphasen-Wechselstrommaschine gespeist wird. Diese bekannte Schaltungsanordnung arbeitet mit einer variablen Zwischenkreisspannung, welche die Ausgangsamplitude des Wechselrichters bestimmt. Bei einer solchen Schaltungsanordnung, bei der sich eine Pulsung des speisenden Gleichstromes erübrigt, treten die vorerwähnten transformatorischen Freilaufströme nicht auf, und es kann daher der Motorblindstrom unmittelbar durch Messung der Freilaufdiodenströme ermittelt werden.

Der Erfindung liegt daher die Aufgabe zugrunde, ein Verfahren der eingangs genannten Art derart weiterzubilden, daß trotz der Speisung des Motors über einen Pulswechselrichter der aufgenommene Blindstrom auf einfache Weise aus dem Freilaufdiodenstrom unter Eliminierung der transformatorischen Freilaufströme erfaßt werden kann.

Diese Aufgabe wird bei dem gattungsgemäßen Verfahren nach der Erfindung durch die kennzeichnenden Merkmale des Patentanspruchs 1 gelöst.

Eine Schaltungsanordnung zur Ausübung des erfindungsgemäßen Verfahrens beschreiben die Merkmale des Patentanspruchs 4.

Der besondere Vorteil der Erfindung liegt darin, daß auch bei Betrieb des Wechselstrom- oder Drehstrommotors über den Pulswechselrichter mit variabler Frequenz und mit konstanter oder nahezu konstanter Zwischenkreisspannung ein dem Rückspeisestrom proportionales Signal gebildet und danach die Maschine auf konstante oder nahezu konstante Erregung geregelt werden kann. Dies beruht auf der Erkenntnis, daß auch bei Speisung des Motors über den Pulswechselrichter anhand der Diodenströme der Rückspeisestrom meßbar ist, obwohl außer dem Blindstrom des Motors die Freilaufströme aufgrund der Spannungstransformation durch den Pulsbetrieb im jeweiligen Diodenstrom enthalten sind.

Da der durch die Spannungstransformation bedingte Freilaufstrom nicht gleichzeitig mit dem Rückspeisestrom fließt, kann der Rückspeisestrom durch die zeitliche Austaktung des Freilaufdiodenstromes ermittelt werden. Weil außerdem der durch die Spannungstransformation bedingte Freilaufstrom nicht gleichzeitig mit dem Zwischenkreisstrom fließt, kann das Taktsignal für die Austaktung des Freilaufdiodenstroms aus dem pulsierenden Speisestrom des Zwischenkreises abgeleitet werden.

Um das pulsierende Meßwertsignal des Rückspeisestroms in ein dem induktiven Blindstrom der Maschine unmittelbar proportionales Regelsignal umzuwandeln, wird das getaktete Meßwertsignal geglättet und darauf das Regelsignal durch Dividieren mit einer drehfeldfrequenzproportionalen Größe gebildet. Das Verhältnis des kapazitiven, meßbaren Blindstroms im Zwischenkreis zum induktiven Blindstrom durch die Hauptinduktivität des Motors erhält man durch folgenden Leistungsvergleich :

Blindleistung des Motors :

$$Q_L = I^2{}_L \omega L$$

Blindleistung des Spannungszwischenkreises :

$$Q_c = \frac{I^2_c}{\omega C}$$

Beide Leistungen müssen gleich sein und durch Gleichsetzen ergibt sich :

$$I_L = I_c \cdot \frac{1}{\omega \sqrt{LC}}$$

Das geglättete Meßwertsignal braucht daher lediglich in einem Multiplizierglied mit dem Faktor $1/\omega \cdot K$ multipliziert zu werden, um ein vom induktiven Blindstrom der Maschine unmittelbar abhängige Regelsignal zu erhalten.

Die Erfindung wird nachstehend anhand der Zeichnungen näher erläutert. Dabei zeigen :

Figur 1 das Prinzipschaltbild eines von einem zweiphasigen Wechselrichter gespeisten Wechselstrommotors ;

Figur 2 das Prinzipschaltbild eines von einem dreiphasigen Wechselrichter gesteuerten Drehstrommotors mit Blindstromerfassung und

Figur 3 den Zeitverlauf einiger Strompulse im Zwischenkreis, im Diodenkreis und am Meßausgang.

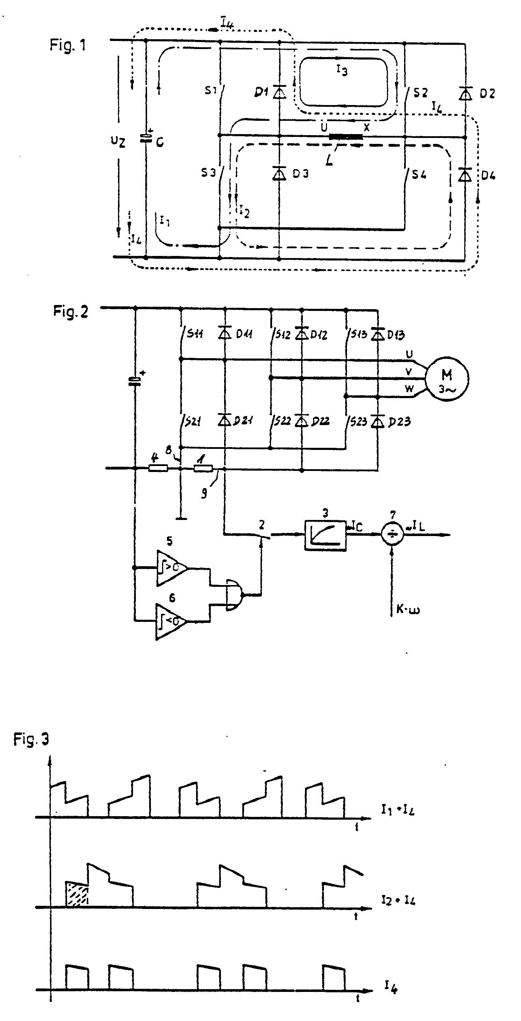

Anhand von Figur 1 werden die im Pulswechselrichter auftretenden Ströme für eine der beiden Motorstromrichtungen dargestellt. Nur der Übersichtlichkeit halber ist hier ein zweiphasiger Wechselrichter gezeigt. Im Prinzip gelten die Stromverläufe auch für mehrphasige Wechselrichtungen.

Für jede Motorstromrichtung ergeben sich vier verschiedene Stromzweige. Diese werden im Takt der Drehfeldfrequenz f durch Schließen bzw. Öffnen von elektronischen Schaltern S1 bis S4 geschaltet, wobei diese elektronischen Schalter S1 bis S4 über einen nicht dargestellten Pulsbreitenmodulator gesteuert werden. Antiparallel zu jedem der Schalter S1 bis S4 ist eine Diode D1 bis D4 geschaltet, über die sich die sogenannten Freilaufströme schließen können.

Sind die Schalter S1 und S3 geschlossen, wird vom Spannungszwischenkreis mit der Speisespannung $U_z$, die konstant oder nahezu konstant gehalten wird, der Strom I1 in den Motor mit den Klemmen U, X eingespeist. Wird der Schalter S2 geöffnet, fließt ein Freilaufstrom I2 über die Diode D4. Wird der Schalter S3 bei geschlossenem Schalter S2 geöffnet, fließt ein Freilaufstrom I3 über die Diode D1.

Der Motor besitzt eine Induktivität L, welche ihren Blindstrom aus dem Zwischenkreis bezieht. Dieser Motorblindstrom ist ein Wechselstrom zwischen der Motorinduktivität L und einer Zwischenkreiskapazität C. Es fließt daher gleichzeitig mit dem Speisestrom I1 über die Dioden D1 und D4 ein sogenannter Rückspeisestrom I4 vom Motor zum Zwischenkreis. Dieser Rückspeisestrom I4 ist der mit der Spannungsgrundwelle in entgegengesetzter Polarität fließende Anteil des über die Kapazität C des Zwischenkreises fließenden Wechselstroms zwischen der Motorinduktivität und dem Zwischenkreis. Der mit der Spannungsgrundwelle in gleicher Polarität fließende Anteil dieses Wechselstroms ist im Speisestrom I1 enthalten. Zur Bestimmung der Größe des Blindstroms ist es jedoch ausreichend, lediglich den Rückspeisestrom I4 zu messen, denn aufgrund der 90°-el-Verschiebung des Motorblindstromes zur Spannungsgrundwelle sind die Blindstromzeitflächen, die sich mit gleicher und entgegengesetzter Spannungswellenpolarität ergeben, gleich groß. Das Problem ist allerdings, nur den Rückspeisestrom I4, der sowohl im Strompfad des Speisestroms I1 als auch in den Strompfaden der Freilaufströme I2 und I3 fließt, für sich zu messen.

Figur 2 zeigt nun eine Schaltungsanordnung zur Ermittlung des Rückspeisestromes I4 am Beispiel einer dreiphasigen Wechselrichter-Brückenschaltung. Diese besitzt im oberen Brückenzweig die elektronischen Schalter S11, S12 und S13, denen jeweils antiparallel die Freilaufdioden D11, D12 und D13 zugeschaltet sind. In analoger Weise besitzt die Schaltung im unteren Brückenzweig die elektronischen Schalter S21 bis S23 und die antiparallelen Freilaufdioden D21 bis D23. Die Meßeinrichtung für den Rückspeisestrom I4 ist nur für den unteren Brückenzweig dargestellt. Dazu ist es wesentlich, daß die Freilaufdioden D21 bis D23 über einen vom Verbindungszweig 8 der elektronischen Schalter S21 bis S23 getrennten Zweig 9 mit dem zugehörigen Pol des Gleichspannungszwischenkreises verbunden sind.

In den Diodenzweig 9 ist eine erste Strommeßeinrichtung 1 eingeschaltet, über die der Diodenstrom erfaßt wird, der sich laut Figur 1 aus einem der Freilaufströme I2, I3 und aus dem Rückspeisestrom I4 ergibt. Um nur den Rückspeisestrom I4 und nicht den Freilaufstrom I2, I3 zu messen, wird das in der Einrichtung 1 ermittelte Meßsignal mittels eines Analogschalters 2 getaktet. Da der Freilaufstrom I2, I3 nicht über den Zwischenkreis fließt und zeitlich gesehen dann nicht fließt, wenn der Speisestrom I1 fließt, wird die Taktung des Meßsignals mittels des Analogschalters 2 vom Vorhandensein des Zwischenkreisstromes abgeleitet.

Hierzu ist in den Zwischenkreis eine Strommeßeinrichtung 4 gelegt. Zwischen dem Abgriff und dem Steuereingang des Analogschalters 2 sind Komparatoren 5, 6 eingeschaltet, die über ein Verknüpfungsglied den Analogschalter 2 immer so steuern, daß dieser jedenfalls dann geöffnet ist, wenn der Speisestrom I1 nicht fließt und somit der betreffende Dioden-Freilaufstrom I2, I3 ausgetaktet wird.

Dazu sind in Figur 3 die zeitlichen Abhängigkeiten des in der Strommeßeinrichtung 4 ermittelten Zwischenkreisstroms, des in der Strommeßeinrichtung 1 erfaßten Diodenstroms und des am Ausgang des Analogschalters 2 anliegenden Meßsignals einander gegenübergestellt. Auf der oberen Abszisse sind die Strompulse, die sich aus der Summe des Speisestroms I1 und des Rückspeisestroms I4 ergeben, dargestellt. Auf der mittleren Abszisse erkennt man, daß dagegen der Diodenstrom, der aus dem Freilaufstrom I2 beispielsweise und dem Rückspeisestrom I4 besteht, zeitlich verschoben ist. Im überlappenden Zeitraum besteht der Diodenstrom lediglich aus dem Rückspeisestrom I4. Dieser ist auf der mittleren Abszisse beim linken Strompuls schraffiert dargestellt und ist folglich analog dem Meßsignal auf der unteren Abszisse.

Das Ausgangsmeßsignal des Analogschalters 2 wird auf einen Meßverstärker 3 gegeben, an dessen Ausgang ein dem kapazitiven Blindstrom des Gleichspannungszwischenkreises proportionales Signal ansteht. Dieses Signal wird gemäß der weiter oben angegebenen Gleichung mittels eines Dividiergliedes 7 noch durch die drehfeldfrequenzproportionale Größe ωK dividiert, so daß am Ausgang des Dividiergliedes 7 ein dem Motorblindstrom proportionales Signal zur Verfügung steht. Dieses Signal wird als Führungs- oder Regelgröße im Regelkreis des Drehstrom- oder Wechselstrommotors weiter verarbeitet.

**Patentansprüche**

1. Verfahren zur Regelung eines Wechselstrom- oder Drehstrommotors, der von einem Pulswechselrichter mit elektronischen Schaltern und dazu antiparallelen Freilaufdioden über einen kapazitiven Gleichspannung-Zwischenkreis mit konstanter oder nahezu konstanter Spannung gespeist wird, wobei der Rückspeisestrom von der Motorinduktivität zur Kapazität des Zwischenkreises gemessen und aus dem Meßwert ein Regelsignal für eine Blindstromregelung gebildet wird, dadurch gekennzeichnet, daß der Meßwert des Rückspeisestroms durch eine zeitliche Austaktung des Freidlaufdiodenstromes gebildet wird.

2. Verfahren nach Anspruch 1, dadurch gekennzeichnet, daß das Taktsignal für die Austaktung des Freilaufdiodenstromes aus dem Speisestrom des Zwischenkreises abgeleitet wird.

3. Verfahren nach Anspruch 1 oder 2, dadurch gekennzeichnet, daß das getaktete Meßwertsignal geglättet und daraus das Regelsignal durch Dividieren mit einer drehfeldfrequenzproportionalen Größe gebildet wird.

4. Schaltungsanordnung zur Durchführung des Verfahrens nach einem der Ansprüche 1 bis 3, dadurch gekennzeichnet, daß zumindest die einem der Pole des Zwischenkreises zugeordneten Schalter (S21-S23) und Freilaufdioden (D21-D23) über getrennte Zweige (8, 9) mit diesem Pol verbunden sind und in den Anschlußzweig (9) der Freilaufdioden (D21-D23) eine erste Strommeßeinrichtung (4) und in den Zwischenkreis eine zweite Strommeßeinrichtung (1) eingeschaltet ist, wobei die erste Meßeinrichtung (4) auf einen Analogschalter (2) geschaltet ist, der über mit der zweiten Meßeinrichtung (1) verbundene Komparatoren (5, 6) betätigt ist.

5. Schaltungsanordnung nach Anspruch 4, dadurch gekennzeichnet, daß der Ausgang des Analogschalters (2) mit einem Multiplizierglied (7) verbunden ist, das das Ausgangssignal des Analogschalters (2) durch eine drehfeldfrequenzproportionale Größe (ω × K) dividiert.

6. Schaltungsanordnung nach Anspruch 5, dadurch gekennzeichnet, daß zwischen dem Analogschalter (2) und dem Multiplizierglied (7) ein Meßverstärker (3) eingeschaltet ist.

**Claims**

1. Method for controlling an alternating current or three-phase motor which is fed with constant or almost constant voltage from a pulse inverter comprising electronic switches and free-wheeling diodes, which are in antiparallel with the switches, *via* a capacitive direct-voltage link, the feedback current from the motor inductance to the capacitance of the link being measured and from the measured value a control signal being formed for a reactive-current controller, characterized in that the measured value of the feedback current is formed by gating the free-wheeling diode current out in time.

2. Method according to Claim 1, characterized in that the clock signal for gating out the free-wheeling diode current is derived from the feed current of the link.

3. Method according to Claim 1 or 2, characterized in that the gated measuring value signal is smoothed and from this the control signal is formed by dividing it by a quantity which is proportional to the frequency of the rotating field.

4. Circuit arrangement for carrying out the method according to one of Claims 1 to 3, characterized in that at least the switches (S21-S23) and free-wheeling diodes (D21-D23) which are associated with one of the poles of the link are connected to this pole *via* separate branches (8, 9), and into the connecting branch (9) of the free-wheeling diodes (D21-D23) a first current sensing device (4) and into the link a second current sensing device (1) is inserted, the first sensing device (4) being connected to an analog switch (2) which is actuated *via* comparators (5, 6) which are connected to the second sensing device (1).

5. Circuit arrangement according to Claim 4, characterized in that the output of the analog switch (2) is connected to a multiplying section (7) which divides the output signal of the analog switch (2) by a quantity (ω × K) which is proportional to the rotating field.

6. Circuit arrangement according to Claim 5, characterized in that a sensing amplifier (3) is inserted between the analog switch (2) and the multiplying section (7).

**Revendications**

1. Procédé pour la régulation d'un moteur à courant alternatif ou triphasé qui est alimenté d'une tension constante ou à peu près constante par un onduleur à impulsions comportant des interrupteurs électroniques et des diodes de roue libre antiparallèles à ceux-ci par l'intermédiaire d'un circuit intermédiaire à tension continue capacitif, le courant d'alimentation de retour étant mesuré de l'inductance du moteur à la capacité du circuit intermédiaire et un signal de régulation pour la régulation du courant réactif étant formé à partir de la valeur de mesure, caractérisé en ce que la valeur de mesure du courant d'alimentation de retour est formée par une synchronisation dans le temps du courant de diodes de roue libre.

2. Procédé suivant la revendication 1, caractérisé en ce que le signal d'horloge pour la synchronisation du courant de diodes de roue libre est dérivé du courant d'alimentation du circuit intermédiaire.

3. Procédé suivant la revendication 1 ou 2, caractérisé en ce que le signal de valeur de mesure synchronisé est lissé et le signal de régulation est formé au départ de ce signal par division au moyen d'une grandeur proportionnelle à la fréquence de champ tournant.

4. Montage de circuit pour l'exécution du procédé suivant l'une quelconque des revendications 1 à 3, caractérisé en ce qu'au moins les interrupteurs (S21-S23) et les diodes de roue libre (D21-D24) associées à un des pôles du circuit intermédiaire sont connectés à ce pôle par l'intermédiaire de branches séparées (8, 9) et, dans la branche de connexion (9) des diodes de roue libre (D21-D23), est connecté un premier dispositif de mesure de courant (4) et, dans le circuit intermédiaire, est connecté un second dispositif de mesure de courant (1), le premier dispositif de mesure (4) étant connecté à un interrupteur analogique (2) qui est actionné par l'intermédiaire de comparateurs (5, 6) reliés au second dispositif de mesure (1).

5. Montage de circuit suivant la revendication 4, caractérisé en ce que la sortie de l'interrupteur analogique (2) est connectée à un élément multiplicateur (7) qui divise le signal de sortie de l'interrupteur analogique (2) par une grandeur (ω × K) proportionnelle à la fréquence de champ tournant.

6. Montage de circuit suivant la revendication 5, caractérisé en ce qu'entre l'interrupteur analogique (2) et l'élément multiplicateur (7) est connecté un amplificateur de mesure (3).

Fig. 1

Fig. 2

Fig. 3

1